# EUROPEAN PATENT APPLICATION

(11) **EP 1 387 576 A2**
(43) Date of publication of application: **04.02.2004**
(21) Application number: 03016795.1
(22) Date of filing: 23.07.2003
(51) Int. Cl.: H04N 5/44, H04N 7/088

(54) **Digital broadcasting receiver and digital broadcasting receiving method**

(30) Priority: 30.07.2002 JP 2002221829
(71) Applicant: Kabushiki Kaisha Toshiba, Tokyo (JP)
(72) Inventor: Shioya, Atsuyoshi, 1-1 Shibaura 1-chome Minato-ku Tokyo 105 (JP)
(74) Representative: Henkel, Feiler, Hänzel

(57) **Abstract**

A digital information receiver including a demodulating circuit (13) which demodulates video information and electronic program guide information of a channel-selected digital broadcasting signal and outputs a video signal and an electronic program signal, respectively, a microcomputer (19) which converts at least a part of the electronic program signal to an electronic program signal of a closed caption format, and a superimposing circuit (20) which superimposes the converted electronic program signal of the closed caption format on the above-described video signal and outputs it. The digital information receiver can use electronic program guide information when the video signal is recorded and reproduced.

## Description

The present invention relates to a digital broadcasting receiver, particularly relates to a digital broadcasting receiver and a digital broadcasting receiving method, which handle electronic program guide information, and a television apparatus and an optical disk apparatus, which use the digital broadcasting receiver and the digital broadcasting receiving method.

Recently the electronic program guide (hereinafter referred to as "EPG information") displaying program related information of television broadcasting on a screen has been realized in the digital broadcasting receiver, the television apparatus, and the like.

A method in which the EPG information is superimposed on a vertical blanking interval (hereinafter referred to as "VBI") of a video signal and transmitted is adopted in an analog transmitting system such as conventional ground wave broadcasting. The EPG information is digitally transmitted as a dedicated data packet in a digital transmitting system such as digital satellite broadcasting. In both cases, the EPG information is decoded on the receiver side to display a program lineup or the program related information on the screen.

However, in the above-described prior art, the EPG information transmitted by the digital broadcasting can not be recorded with VTR of an analog format. Though the image in which the program lineup or program information is displayed on the screen can be recorded, in this case, it is impossible to perform operation of turning on/off the display in reproducing.

In the EPG information superimposed on VBI in the analog broadcasting, depending on a signal format, sometimes it is difficult in VTR of the analog format to record/reproduce data in the complete form. Similarly to EPG information of the digital broadcasting, sometimes there is a problem that the program lineup or the program information can not be called in the reproducing.

On the other hand, in Jpn. Pat. Appln. KOKAI Publication No. 2001-8161, there is described a receiver which uses teletext information by converting the teletext information to a closed caption. However, these receivers are not to show a technique handling the EPG information, since usual VTR can not record the EPG information such as the digital broadcasting, there is the problem that the program information can not be displayed in the reproducing.

That is, in the EPG information transmitted in the digital broadcasting, the program lineup or the program information can be recorded as the on-screen display, however, there is the program that the operation of the usual EPG information, in which specific information of the EPG information is displayed or not displayed according to operation of a user, can not be performed in reproducing the image.

It is an object of the invention to provide a digital broadcasting receiver and a digital broadcasting receiving method, a television apparatus, and an optical disk apparatus, which can record and reproduce electronic program guide information (EPG information) as the analog video signal and generate the video signal in which EPG information is superimposed.

In order to achieve the above object, the present invention provides a digital information receiver comprises a channel select portion which channel-selects a digital broadcasting signal accompanied with electronic program guide information and video information; a demodulating portion which demodulates the video information and the electronic program guide of the digital broadcasting signal channel-selected by the channel select portion and outputs a video signal and an electronic program signal, respectively; a converting portion which converts at least a part of the electronic program signal outputted from the demodulating portion to an electronic program signal of a closed caption format; and a superimposing circuit which superimposes the electronic program signal of the closed caption format converted by the converting portion on the video signal outputted from the demodulating portion and outputs it.

That is, when the digital information receiver according to the invention receives and demodulates electronic program guide information, i.e., EPG information, the digital information receiver neither only displays the display according to EPG information on the image nor records it, but the unchanged EPG information is converted to the closed caption format to superimpose it in a vertical blanking interval (VBI) region of the video signal. Consequently, the EPG information can be handled in the same way as caption information of the closed caption, and the display can be turned on/off and arbitrary information in the EPG information can be displayed in the reproducing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a digital broadcasting receiver according to a first embodiment of the invention;
FIG. 2 is a block diagram showing an example of a television receiver according to a second embodiment of the invention;
FIG. 3 is a block diagram showing an example of an optical disk apparatus equipped with a digital broadcasting tuner according to a third embodiment of the invention;
FIG. 4 is a block diagram showing an example of a configuration of a program signal demodulating circuit according to the invention;
FIG. 5 is a block diagram showing an example of the configuration of the program signal superimposing circuit according to the invention;
FIG. 6 is a flow chart showing an example of a processing of EPG conversion according to the invention;
FIGS. 7A and 7B are flow charts showing another example of the processing of EPG conversion according to the invention in detail;
FIG. 8A is a graph showing a vertical blanking interval of a video signal according to the invention; and
FIG. 8B is a graph showing a closed caption signal according to the invention.

Each embodiment of the invention will be described below in detail referring to the accompanying drawings.

### [First embodiment]

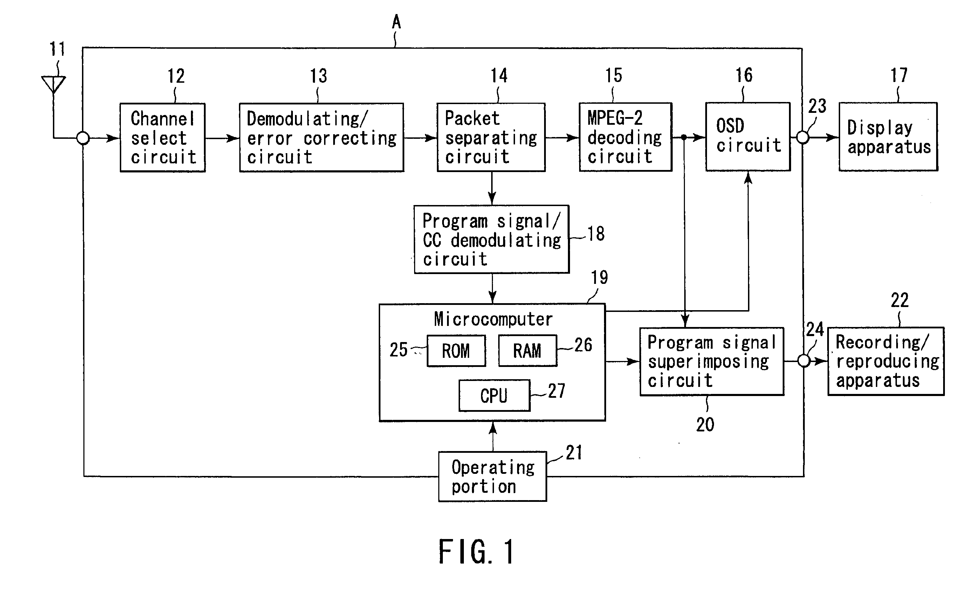

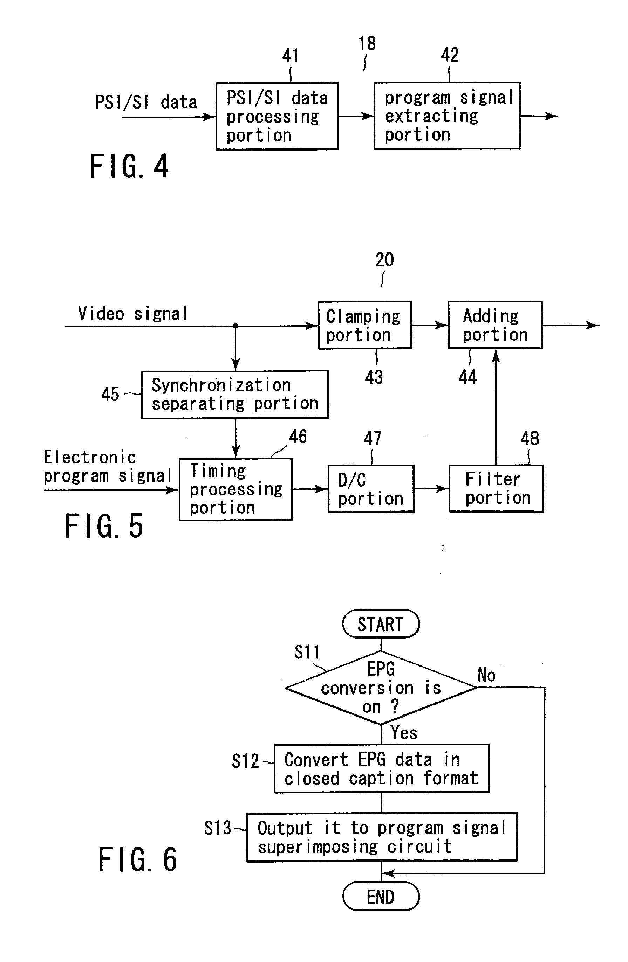

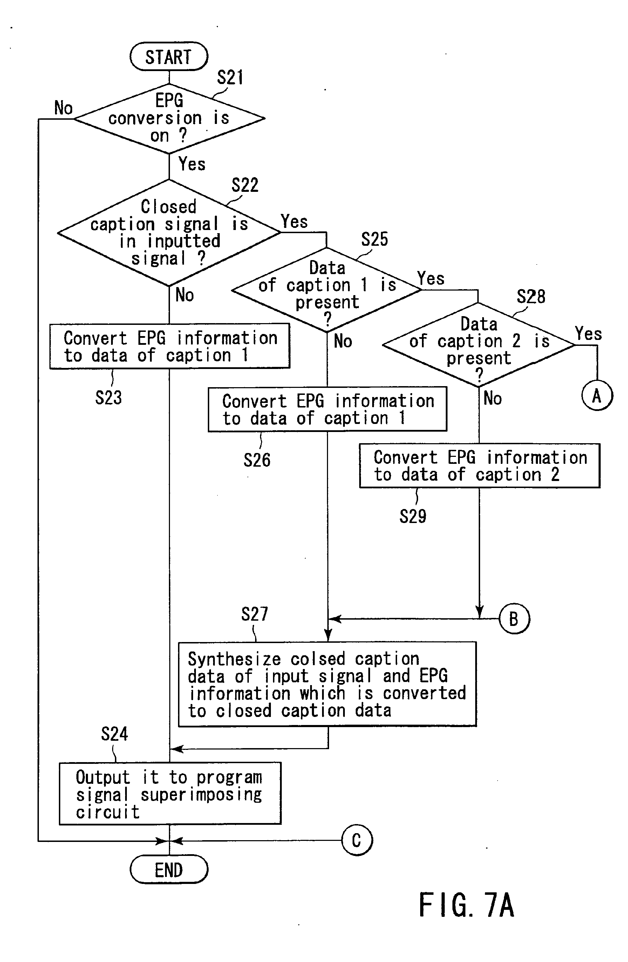

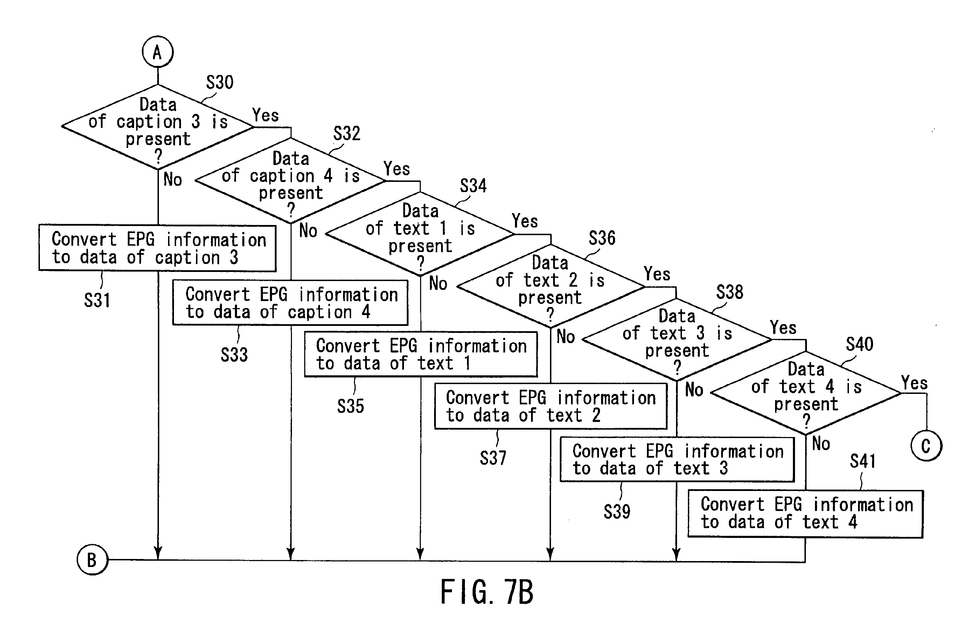

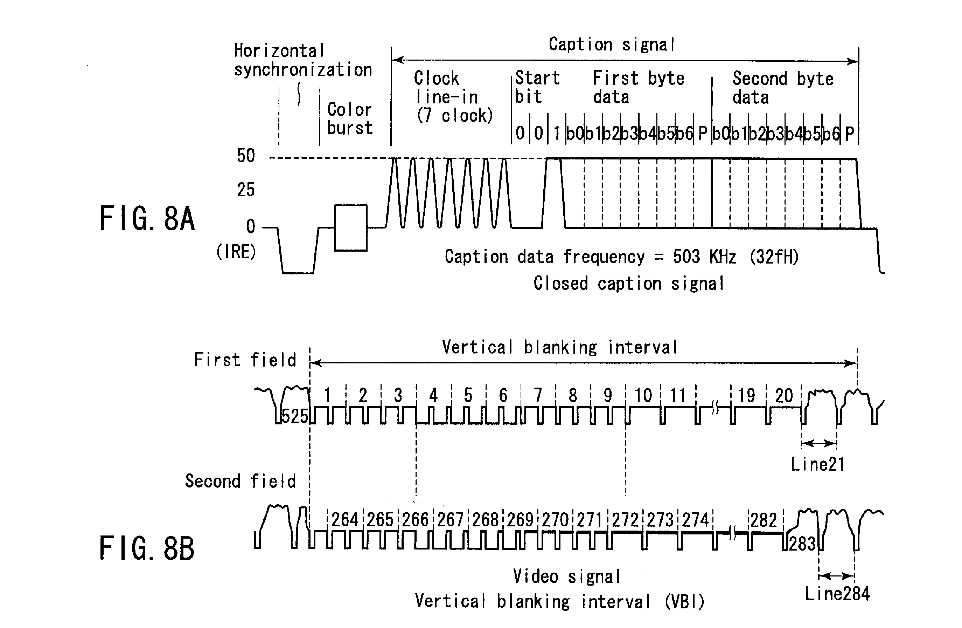

A first embodiment provides a digital broadcasting receiver according to the invention. FIG. 1 is a block diagram showing an example of the digital broadcasting receiver according to the first embodiment of the invention, FIG. 4 is a block diagram showing an example of a configuration of a program signal demodulating circuit according to the invention, FIG. 5 is a block diagram showing an example of a configuration of a program signal superimposing circuit according to the invention, FIG. 6 is a flow chart showing an example of a processing of EPG conversion according to the invention, FIGS. 7A and 7B are flow charts showing another example of the processing of EPG conversion according to the invention in detail, FIG. 8A is a graph showing a vertical blanking interval of a video signal according to the invention, and FIG. 8B is a graph showing a closed caption signal according to the invention.

In the digital broadcasting receiver according to the invention, as described below in detail, EPG information which is electronic program guide information included in the digital broadcasting is converted to a closed caption signal and recorded in, e.g. an external recorder 22. For example, as shown in FIG. 1, a digital broadcasting receiver A according to the invention includes a channel select circuit 12 which is connected to a satellite antenna 11, a demodulating/error correcting circuit 13 which receives an output of a digital broadcasting signal which is channel-selected, and a packet separating circuit 14 which receives an output signal to which the demodulating processing and the error correction has been performed. Further, the digital broadcasting receiver A includes an MPEG-2 decoding circuit 15 to which the packet of the desired program separated from the packet separating circuit 14 is supplied and an on screen display (hereinafter referred to as "OSD") circuit 16 to which the decoded video signal is supplied. The output of the on screen display circuit 16 is outputted to an output terminal for audio-visual 23. The output terminal for audio-visual 23 is connected to an external display apparatus 17 such as an external display.

Further, the digital broadcasting receiver A also includes a program signal/CC demodulating circuit 18 to which the EPG information including the program information is supplied from the packet separating circuit 14, a microcomputer 19 to which the demodulated output of the program signal/CC demodulating circuit 18 is supplied, and a program signal superimposing circuit 20 which receives the output of the microcomputer 19. The microcomputer 19 is connected to an operating portion 21 and supplied with an operating signal. The video signal is supplied from the MPEG-2 decoding circuit 15 to the program signal superimposing circuit 20. A signal to be synthesized in the EPG information is supplied from the microcomputer 19 to the OSD circuit 16. The output of the program signal superimposing circuit 20 is connected to an output terminal for picture recording 24, and further connected to an external recording/reproducing apparatus 22 having a recording/reproducing function such as VTR (Video tape Recorder) or the optical disk apparatus having the recording function.

The microcomputer 19 includes a ROM 25, a RAM 26, a CPU 27, and the like therein, and is connected to each unit to control entire operation.

As shown in FIG. 4, the program signal/CC demodulating circuit 18 includes a PSI/SI data processing portion 41 to which PSI/SI data is supplied and a program signal extracting portion 42 which is connected to the output of the PSI/SI data processing portion 41. As shown in FIG. 5, the program signal superimposing circuit 20 includes a clamping portion 43 to which the video signal is supplied, an adding portion 44 which is connected to the output of the clamping portion 43, a synchronization separating portion 45 to which the video signal is supplied, a timing processing portion 46 to which the output of the synchronization separating portion 45 and the electronic program signal are supplied, a D/A portion 47 to which the output of the timing processing portion 46 is supplied, and a filter portion 48 to which the output of the D/A portion 47 is connected. The output of the filter portion 48 is connected to the adding portion 44.

### (Operation)

In the digital broadcasting receiver A according to the invention which has the above-described configuration, operation will be described below in detail. Digital television broadcasting data, which is received by the satellite antenna 11 and frequency-conversed, is channel-selected by the channel select circuit 12, and the demodulating processing and the error correction processing are performed to the digital television broadcasting data in the demodulating/error correcting circuit 13.

The packet separating circuit 14 performs the packet separating processing to an inputted transport stream, outputs a packet of a desired program to the MPEG-2 decoding circuit 15, and also outputs The EPG information including the program information to the program signal/CC demodulating circuit 18. The MPEG-2 decoding circuit 15 decodes the image and speech sound of the selected packet.

The program signal/CC demodulating circuit 18 demodulates the inputted EPG information to output the electronic program signal. The demodulated electronic program signal is supplied to the microcomputer 19 and processed. The microcomputer 19 generates a desired program information display signal from the electronic program signal on the basis of a command from the operating portion 21 and outputs it to the OSD circuit 16. The OSD circuit 16 synthesizes the program information display signal with the decoded video signal to output it to the output terminal for audio-visual 23 in order to display the program information such as a title of the program in, e.g. a region where a caption is displayed in the image.

As shown in the flow chart in FIG. 6, if the command from the operating portion 21 indicates to perform the EPG conversion (S11), the microcomputer 19 converts the electronic program signal of the program which is being received to the signal of the closed caption format (S12). The converted signal of the closed caption format is supplied to the program signal superimposing circuit 20 (S13). The program signal superimposing circuit 20 superimposes the inputted signal of the closed caption format on the vertical blanking interval (VBI) of the video signal inputted from the MPEG-2 decoding circuit 20, and it is outputted from the output terminal for picture recording 24.

The recording/reproducing apparatus 12, connected to the output terminal for picture recording 24, such as VTR or the recordable/reproducible optical disk apparatus records the video signal accompanied by the electronic program signal of the closed caption format. The closed caption signal has a clock of 503 kHz as a reference, and the closed caption signal can be recorded /reproduced without losing any data even in the conventional VTR of the analog format. Accordingly, the program information of the closed caption format superimposed on the vertical blanking interval (VBI) of the video signal can be recorded and reproduced by the usual recording/reproducing apparatus, decoded by a closed caption decoder built in the display apparatus such as the television, the recording/reproducing apparatus, or the like during the reproducing, and displayed on the screen.

As described above in detail, in the digital broadcasting receiver according to the first embodiment, the EPG information and the like which are the electronic program guide information such as digital broadcasting can be recorded with the conventional VTR of the analog format. The EPG information or the specific information can be displayed on the screen according to the operation of the user during reproducing the recorded video signal.

### (VBI and closed caption signal)

The vertical blanking interval (VBI) and the closed caption signal will be described referring to FIG. 8A. For example, VBI shown in FIG. 8A occupies from line 1 to line 21 of a first field and from line 264 to line 284 of a second field, which are not displayed on the screen, in 525 scanning lines which are divided into the first field and the second field. At this point, line 21 of the first field and line 284 of the second field are utilized for the closed caption signal. Data channels 1 and 2 are allocated to line 21 of the first field and data channels 3 and 4 are allocated to line 284 of the second field as an example.

FIG. 8B is an example of the closed caption signal, the converted EPG information according to the invention is stored in first byte data and second byte data of the caption signal in FIG. 8B. At this point, identification information such as "00" or "01" is given as the data channel to a front end of each data, which allows data management in each data channel.

### (Modification)

The example of the case that only the program information which is being received is converted in the closed caption format and outputted among the EPG information has been described above. However, the program information and the like except the program which is being received can be also converted and the entire EPG information can be also converted.

In this case, the current program information can be superimposed in a caption format and the program lineup information can be superimposed in a text format. Further, those can be converted in an extended data service (XDS) format, which is an extended specification of the closed caption, and superimposed.

### (In case where closed caption signal originally exists)

When the EPG information is converted to the data of the closed caption format, sometimes the closed caption signal originally exists in the video information. The processing of this case will be described below.

In a flow chart shown in FIGS. 7A and 7B, in the case where the operating portion 21 directs the EPG conversion (S21), if the closed caption is not detected in the video signal by the program signal/CC demodulating circuit 18 in the processing of the microcomputer 19 (S22), as described above, the EPG information is converted to data of CAPTION 1 to synthesize two items of caption information (S23), and it is supplied to the program signal superimposing circuit 20 (S24). At this point, if the closed caption signal which originally exists in the video information is detected (S22), as described below, the conversion must be performed so that the closed caption signal of the EPG information which is newly converted does not become the same channel data.

That is, if the data of CAPTION 1 is absent (S25), the EPG information is converted as the data of CAPTION 1 (S26), the caption signal which originally exists and the caption signal in which the EPG information is converted are synthesized (S27). If the data of CAPTION 1 is present and data of CAPTION 2 is absent (S28), the EPG information is converted as the data of CAPTION 2 (S29), and the caption signal which originally exists and the caption signal in which the EPG information is converted are synthesized (S27). If the data of CAPTION 2 is present and data of CAPTION 3 is absent (S30), the EPG information is converted as the data of CAPTION 3 (S31), and the caption signal which originally exists and the caption signal in which the EPG information is converted are synthesized (S27). If the data of CAPTION 3 is present and data of CAPTION 4 is absent (S32), the EPG information is converted as the data of CAPTION 4 (S33), and the caption signal which originally exists and the caption signal in which the EPG information is converted are synthesized (S27).

If the data of CAPTION 4 is present and data of TEXT 1 is absent (S34), the EPG information is converted as the data of TEXT 1 (S35), and the caption signal which originally exists and the caption signal in which the EPG information is converted are synthesized (S27). If the data of TEXT 1 is present and data of TEXT 2 is absent (S36), the EPG information is converted as the data of TEXT 2 (S37), and the caption signal which originally exists and the caption signal in which the EPG information is converted are synthesized (S27). If the data of TEXT 2 is present and data of TEXT 3 is absent (S38), the EPG information is converted as the data of TEXT 3 (S39), and the caption signal which originally exists and the caption signal in which the EPG information is converted are synthesized (S27). If the data of TEXT 3 is present and data of TEXT 4 is absent (S40), the EPG information is converted as the data of TEXT 4 (S41), and the caption signal which originally exists and the caption signal in which the EPG information is converted are synthesized (S27). If CAPTIONS 1 to 4 and TEXTs 1 to 4 are present, the superimposing processing is not performed.

As described above, when the closed caption signal such as the caption which originally exists in the video signal has been superimposed, the EPG information is superimposed in a data channel different from the data channel (CAPTIONS 1 to 4, TEXTs 1 to 4, and XDS) in which the closed caption data has been superimposed, so that the program information can be further superimposed and utilized while the caption information and the like are held.

### [Television apparatus of second embodiment]

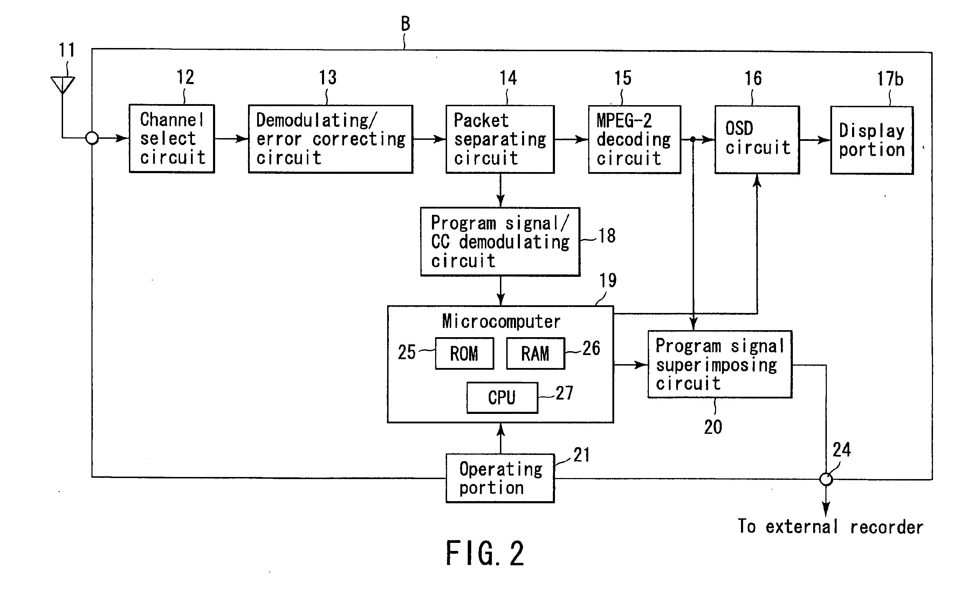

A second embodiment provides a television apparatus having the same action and effect as those of the digital broadcasting receiver shown in the first embodiment. FIG. 2 is a block diagram showing an example of the television apparatus according to the second embodiment of the invention.

A television apparatus B according to the invention has a configuration and an operation common to the digital broadcasting receiver according to the first embodiment, so that the description of the television apparatus B is omitted. At this point, the video signal is directly supplied from the OSD circuit 16 to a display portion 17b, the display of the EPG information can be turned on and off according to the operation from the operating portion 21. When the specific information of the EPG information, e.g. displaying direction of the program lineup of a week is received, only the specific information can be synthesized with the video information and displayed on the screen.

On the other hand, the EPG information is converted to the closed caption signal by performing the same processing as that of the digital broadcasting receiver and outputted as the recordable video signal from the output terminal for picture recording 24, so that the EPG information can be freely displayed or not displayed according to the operation when the recorded video signal is reproduced.

### [Optical disk apparatus of third embodiment]

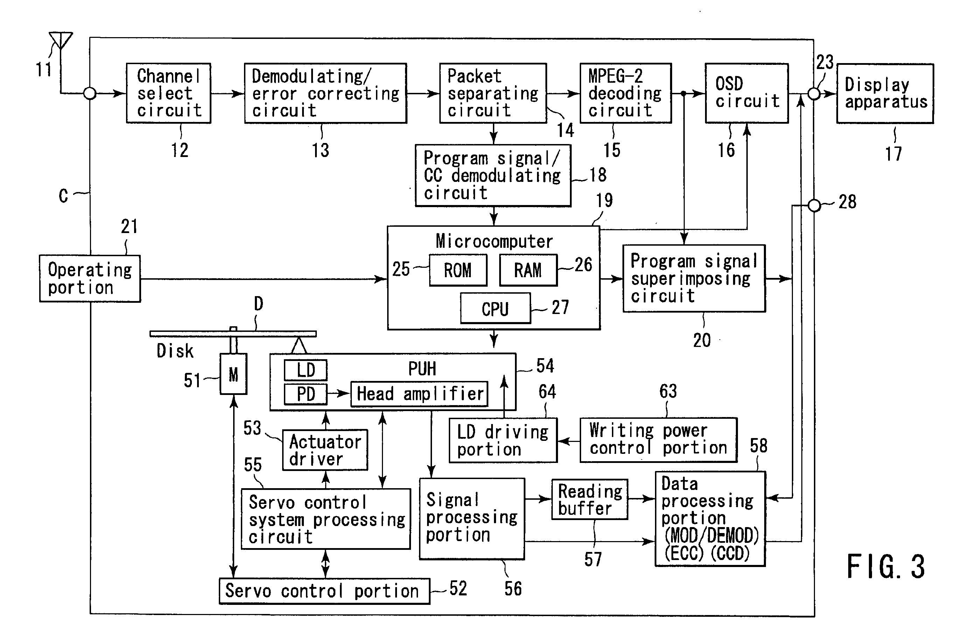

A third embodiment of the invention provides an optical disk apparatus having the same action and effect as those of the digital broadcasting receiver shown in the first embodiment. FIG. 3 is a block diagram showing an example of the optical disk apparatus equipped with a digital broadcasting tuner according to the third embodiment of the invention. An optical disk apparatus C according to the invention is a recording/reproducing apparatus for the optical disk having the receiver function of the digital broadcasting receiver according to the first embodiment, and has a configuration and an operation common to the digital broadcasting receiver, so that the description of the optical disk apparatus C is omitted. In addition to the configuration of the above-described digital broadcasting receiver, the optical disk apparatus C includes a rotating motor 52 which rotates an optical disk D at constant number of revolutions, an optical pickup head 54, an actuator driver 53 for an actuator driving the optical pickup head 54, a servo control system processing circuit 55 which is connected to the actuator driver 53 in order to control the actuator, and a servo control portion 52 which controls the rotating motor 51 and the servo control system processing circuit 55.

The optical disk apparatus C also includes a signal processing portion 56 which receives a signal from a head amplifier of the optical pickup head 54 and performs the signal processing, a reading buffer 57 from which the processed signal is supplied, and a data processing portion 58. The data processing portion 58 includes a modulating/demodulating portion which modulates the detected signal and demodulates the signal to be recorded, an error correcting portion, and a closed caption decoder (CCD) which demodulates the closed caption signal. The data processing portion 58 demodulates the closed caption signal in the video signal to be reproduced, and displays the EPG information according to the indication from the operating portion 21 or displays the closed caption information which originally exists. The video signal, on which the EPG information converted to the closed caption format is superimposed, is supplied from the program signal superimposing circuit 20 to the data processing portion 58. Further, the optical disk apparatus C also includes a writing power control portion 63 which decides writing power in the writing and an LD driving circuit 64 which is controlled by the LD driving circuit 64 and supplies a driving signal to a laser diode in the optical pickup head 54.

In the optical disk apparatus C having the above-described configuration, according to the operating signal of the operating portion 21, under the control of the microcomputer 19, the CPU 27 uses the RAM 26 as a working area and performs a predetermined operation obeying programs including the processing of the EPG information of the invention, which is recorded in the ROM 27.

That is, the optical disk D rotated with the rotating motor 51 is irradiated with a laser beam outputted from the optical pickup head 54 controlled by the actuator driver 53. The reflected light from the optical disk D is transformed into an electric signal with the head amplifier. The electric signal is inputted to the signal processing portion 56. The signal processing portion 56 includes an RF amplifier and the like.

The servo control system processing circuit 55 includes an objective lens guiding circuit, a focusing control circuit, an objective lens driving signal switch, an objective lens driving circuit, a wobbling signal detecting portion, and the like. The servo control system processing circuit 55 avoids the wobbling of the optical disk and performs the stable focus sliding operation according to the working of the servo control portion 52 and the like. At the same time, the wobbling signal is also detected. A writing clock generated according to the wobbling signal is supplied to the reading buffer 57.

In the data writing operation, the video signal on which the EPG information is superimposed is supplied to the data processing portion 58 in the above-described way, an error detecting code or ID is added to the EPG information, and it is sent to the recording power control portion 63. In the writing power control portion 63, optimum recording strategy for recording speed is decided, which allows the signal to be recorded in the optical disk by using the laser diode (LD) driving circuit 64.

In the reading, the RF signal read from the head amplifier of the optical pickup head 54 is transmitted to the reading buffer 57 and a PLL circuit through an optimum equalizer. The channel data is read in the reading buffer 57 by a reading clock generated in the PLL circuit. In the data which has been read, a synchronized symbol data is read with the data processing portion 58 including an encoder, a decoder, an ECC circuit, and the like. Then, the error correction and descrambling processing are performed, and the video signal which can be displayed on the display apparatus 17 is outputted.

When the above-described closed caption information is included in the video signal, the closed caption signal in the video signal to be reproduced is demodulated by the closed caption decoder (CCD) in the data processing portion 58 and synthesized with the video signal and outputted in order to display the EPG information in a predetermined region of the video information. Consequently, the display apparatus 17 can display the EPG information according to the direction from the operating portion 21 or the closed caption information which originally exists.

As described above, even in the optical disk apparatus C according to the invention, since the electronic program guide information (EPG information) can be recorded and reproduced as the analog video signal like the cases of the first and second embodiments, the optical disk apparatus which can freely use the EPG information in the reproducing can be provided.

Though those skilled in the art can realize the invention by the above-described various embodiments, those skilled in the art can easily conceive various modifications of these embodiments, or apply the invention to various modes without any inventive ability. Accordingly, the invention can cover a wide range consistent with the disclosed principle and the novel feature, and it should not be limited to the above-described embodiments.

For example, in addition to the imaging apparatus such as a television and a set-top box, the invention can be also applied to an apparatus such as a digital camera and a personal computer, which has the image output. That is, the recording/reproducing can be performed and the information can be selectively displayed by the usual video cassette recorder in such a manner that the specific information is converted to the closed caption signal format and superimposed.

As described above in detail, according to the invention, even the usual analog video cassette recorder can record the EPG information in such a manner that the EPG information is converted to the closed caption format, superimposed on the video signal, and outputted. As a result, it is possible to provide the digital broadcasting receiver and its method, which can sufficiently use the EPG information in the reproducing, and the television apparatus and the optical disk apparatus, which utilize the digital broadcasting receiver and its method.

## Claims

1. A digital information receiver **characterized by** comprising:
a channel select portion (12) which channel-selects a digital broadcasting signal accompanied with electronic program guide information (EPG) and video information;
a demodulating portion (13, 15, and 18) which demodulates the video information and the electronic program guide of the digital broadcasting signal channel-selected by the channel select portion and outputs a video signal and an electronic program signal, respectively;
a converting portion (19) which converts at least a part of the electronic program signal outputted from the demodulating portion to an electronic program signal of a closed caption format; and
a superimposing circuit (20) which superimposes the electronic program signal of the closed caption format converted by the converting portion on the video signal outputted from the demodulating portion and outputs it.

2. A digital information receiver according to claim 1, **characterized in that**, when information of the closed caption format which originally exists in the video signal is detected, the converting portion converts at least a part of the electronic program signal outputted from the demodulating portion to the electronic program signal of the closed caption format, synthesizes the electronic program signal of the closed caption format with the information of the closed caption format which originally exists in the video signal, and output it to the superimposing portion.

3. A digital information receiver according to claim 1, **characterized in that**, when information of the closed caption format which originally exists in the video signal is detected, the converting portion further has a decision portion (18) which decides a data channel of the information of the closed caption format; and
a function of converting at least a part of the electronic program signal outputted from the demodulating portion to the electronic program signal of the closed caption format of a data channel different from the data channel decided by the decision portion, synthesizing the electronic program signal of the closed caption format with the information of the closed caption format which originally exists in the video signal, and outputting it to the superimposing portion.

4. A digital information receiver according to claim 1, **characterized in that** the superimposing portion superimposes the electronic program signal of the closed caption format converted by the converting portion on a vertical blanking interval (VBI) region of the video signal demodulated by the demodulating portion and output it.

5. A digital information receiver according to claim 1, **characterized in that** the converting portion converts only information concerning a program, which is currently being received, among the electronic program signals demodulated by the demodulating portion to the electronic program signal of the closed caption format.

6. A digital information receiver according to claim 1, **characterized in that** the converting portion converts information concerning a program, which is currently being received, and other information among the electronic program signals demodulated by the demodulating portion to the electronic program signal of the closed caption format.

7. A digital information receiver according to claim 1, **characterized in that** the converting portion converts a program, which is currently being received, among the electronic program signals demodulated by the demodulating portion to the electronic program signal of a caption format and converts a program lineup except the program to the electronic program signal of a text format.

8. A digital information receiver according to claim 1, **characterized in that** the converting portion converts the electronic program signal demodulated by the demodulating portion to the electronic program signal of an XDS (Extended Data Services) format, which is an extended specification of the closed caption.

9. A digital information receiver according to claim 1, **characterized by** further comprising:
a synthesis portion (16) which synthesizes a synthesized video signal for displaying program information based on the electronic program signal at a predetermined region of an image based on the video signal in an external display apparatus and outputs it by superimposing the electronic program signal demodulated by the demodulating portion on the video signal according to an operating signal from an operating portion.

10. A digital information receiver according to claim 1, **characterized by** further comprising:
a synthesis portion (16) which synthesizes a electronic program signal, demodulated by the demodulating portion, with the video signal and outputs the synthesized video signal according to an operating signal from an operating portion (21); and
a display portion (17b) to which the synthesized video signal outputted from the synthesis portion is supplied and which displays the program information, based on the electronic program signal, at a predetermined region of the image, based on the video signal.

11. A digital information receiver according to claim 1, **characterized by** further comprising:
a recording portion (51, 52, 53, 54, 55, 56, 57, 58, 63, 64) which records the video signal, on which the electronic program signal of the closed caption format is superimposed by the superimposing portion, in a storage area of an optical disk (D) in such a manner that a light beam is emitted and the storage area is irradiated with the light beam according to the video signal.

12. A digital information receiving method **characterized by** comprising:
channel-selecting a digital broadcasting signal accompanied with electronic program guide information (EPG) and video information (12);
demodulating the video information and the electronic program guide of the digital broadcasting signal channel-selected by the channel select portion and outputting a video signal and an electronic program signal, respectively (13, 15, 18);
converting at least a part of the demodulated electronic program signal to an electronic program signal of a closed caption format (19); and
superimposing the converted electronic program signal of the closed caption format on the demodulated video signal and outputting it (20).

13. A digital information receiving method according to claim 12, **characterized in that**, when information of the closed caption format which originally exists in the video signal is detected, the conversion converts at least a part of the electronic program signal to the electronic program signal of the closed caption format, synthesizes the electronic program signal of the closed caption format with the information of the closed caption format which originally exists in the video signal, and output it.

14. A digital information receiving method according to claim 12, **characterized in that**, when information of the closed caption format which originally exists in the video signal is detected, the conversion decides a data channel of the information of the closed caption format, converts at least a part of the electronic program signal to the electronic program signal of the closed caption format of a data channel different from the data channel decided by the decision portion, synthesizes the electronic program signal of the closed caption format with the information of the closed caption format which originally exists in the video signal, and outputs it to the superimposing step.

15. A digital information receiving method according to claim 12, **characterized in that** the superimposing superimposes the electronic program signal of the closed caption format on a vertical blanking interval (VBI) region of the video signal and output it.

16. A digital information receiving method according to claim 12, **characterized in that** the conversion converts only information concerning a program, which is currently being received, among the electronic program signals to the electronic program signal of the closed caption format.

17. A digital information receiving method according to claim 12, **characterized in that** the conversion converts information concerning a program, which is currently being received, and other information among the electronic program signals to the electronic program signal of the closed caption format.

18. A digital information receiving method according to claim 12, **characterized in that** the conversion converts a program, which is currently being received, among the electronic program signals to an electronic program signal of a caption format and converts a program lineup except the program to an electronic program signal of a text format.

19. A digital information receiving method according to claim 12, **characterized in that** the conversion converts the electronic program signal to an electronic program signal of an XDS (Extended Data Services) format, which is an extended specification of the closed caption.

20. A digital information receiving method according to claim 12, **characterized by** further comprising:
synthesizing a synthesized video signal for displaying program information based on the electronic program signal at a predetermined region of an image based on the video signal in an external display apparatus, and outputting it by superimposing the electronic program signal demodulated by the demodulating portion on the video signal according to an operating signal from an operating portion.
